(19)

**Europäisches Patentamt**
**European Patent Office**
**Office européen des brevets**

(11)　**EP 1 380 832 B1**

(12)　**EUROPÄISCHE PATENTSCHRIFT**

(45) Veröffentlichungstag und Bekanntmachung des Hinweises auf die Patenterteilung:
**28.02.2007  Patentblatt 2007/09**

(51) Int Cl.:
*G01N 19/04* *(2006.01)*

(21) Anmeldenummer: **03015263.1**

(22) Anmeldetag: **07.07.2003**

(54) **Verfahren zur Bestimmung der Hafteigenschaften von Materialien**

Process for estimation of materials adhesive properties

Procédé d'estimation des propriétés d'adhérence de matériaux

(84) Benannte Vertragsstaaten:
**AT BE BG CH CY CZ DE DK EE ES FI FR GB GR HU IE IT LI LU MC NL PT RO SE SI SK TR**

(30) Priorität: **09.07.2002  DE 10231383**

(43) Veröffentlichungstag der Anmeldung:
**14.01.2004  Patentblatt 2004/03**

(73) Patentinhaber: **Universität Göttingen**
**37073 Göttingen (DE)**

(72) Erfinder:
- **Pundt, Astrid**
  **37085 Göttingen (DE)**
- **Kirchheim, Reiner**
  **37075 Göttingen (DE)**

(74) Vertreter: **Patentanwälte**
**Ruff, Wilhelm, Beier, Dauster & Partner**
**Kronenstrasse 30**
**70174 Stuttgart (DE)**

(56) Entgegenhaltungen:
- **DATABASE WPI Section Ch, Week 199132 Derwent Publications Ltd., London, GB; Class M11, AN 1991-236165 XP002293922 & SU 1 592 764 A (NAGIRNYI V M), 15. September 1990 (1990-09-15)**
- **LAUDAHN U ET AL: "Determination of elastic constants in thin films using hydrogen loading" APPLIED PHYSICS LETTERS, AMERICAN INSTITUTE OF PHYSICS. NEW YORK, US, Bd. 74, Nr. 5, 1. Februar 1999 (1999-02-01), Seiten 647-649, XP012023147 ISSN: 0003-6951**
- **LAUDAHN U ET AL: "Hydrogen-induced stress in Nb single layers" JOURNAL OF ALLOYS AND COMPOUNDS, ELSEVIER SEQUOIA, LAUSANNE, CH, Bd. 293-295, 20. Dezember 1999 (1999-12-20), Seiten 490-494, XP004364674 ISSN: 0925-8388**
- **J. MERTINS ET AL.: "Motivation und Entwicklung einer optischen Versuchsanordnung zur 2-dimensionalen Messung lateraler mechanischer Spannungen un dünnen, haftenden Filmen" DEUTSCHE PHYSIKALISCHE GESELLSCHAFT: E-VERHANDLUNGEN 1999 - PROGRAMM UND ABSTRACTS DER SITZUNG M 21, [Online] 1999, XP002293921 Gefunden im Internet: <URL: http://dpg.rz.uni-ulm.de/archive/1999 /m_21.html> [gefunden am 2004-08-26]**

**Beschreibung**

Die Erfindung betrifft ein Verfahren zur Bestimmung der Hafteigenschaften mindestens einer Beschichtung oder mindestens eines Filmes aus mindestens einem ersten Material auf einem Substrat aus einem zweiten Material.

Die Frage, ob zwei Materialien überhaupt oder ausreichend fest aneinanderhaften, ist in vielen Bereichen der Industrie von großer Bedeutung. Als Beispiele seien hier nur genannt zum einen die Haftung von Polymerfilmen, insbesondere Lacken auf Metallen oder Kunststoffen, z. B. in der Automobilindustrie oder zum anderen die Haftung von Metallfilmen auf Polymeren, z. B. in der Lebensmittelindustrie (Milchtüten, Chipstüten und dergleichen). Ist die Haftung zwischen den gewählten Materialien nicht ausreichend, kommt es zur Ablösung der Materialien voneinander. Die zur Ablösung führenden Spannungen resultieren häufig aus unterschiedlichen Wärmeausdehnungskoeffizienten der Materialien, aus Oxidationseffekten oder aus anderen Mechanismen. Eine solche Ablösung ist für eine industrielle Anwendung nicht hinnehmbar. Es muß dann gegebenenfalls aufwendig eine geeignetere Materialkombination gefunden werden.

Um die Hafteigenschaften unterschiedlicher Materialien aneinander zu prüfen, sind aus dem Stand der Technik verschiedene Verfahren bekannt. So ist hier beispielsweise der sogenannte "pull-off"-Test zu nennen, bei dem ein aufgeklebter Stempel unter einer definierten Kraft senkrecht zu den verbundenen Materialien zieht. Weiter ist der sogenannte "adhesive tape"-Test bekannt, bei dem auf die verbundenen Materialien ein Klebestreifen aufgebracht und anschließend abgezogen wird. Schließlich gibt es auch sogenannte "scratch"-Tests, bei denen ein spitzer Gegenstand, z. B. eine Nadel, unter einer bestimmten Kraft ein Material zerkratzt. Eine Abwandlung solcher Techniken ist auch der sogenannte "indentation"-Test, bei dem eine scharfe Spitze in das Material gedrückt wird und die entstehenden Ränder bzw. die beim Herausziehen entstehende Form optisch untersucht werden. Darüber hinaus können auch andere Methoden wie Rastersondentechniken oder akustische Emissionstechniken zur Feststellung und Untersuchung von Schichtablösungen eingesetzt werden.

Die genannten Methoden haben verschiedene Nachteile. So gehen beim "adhesive tape"-Test oder beim "pull-off"-Test Materialeigenschaften des Klebers oder Klebestreifens in die Untersuchung ein, die nichts mit der eigentlichen Haftung der Materialien aneinander zu tun haben. Darüber hinaus arbeiten diese Tests und auch die beschriebenen Kratztechniken nicht zerstörungsfrei und sind oft schwer reproduzierbar. Die übrigen genannten Tests erfordern vergleichsweise aufwendige und teure Apparaturen. Alle genannten Methoden haben darüber hinaus den Nachteil, daß eine Quantifizierung der Hafteigenschaften nicht verläßlich möglich ist.

Weiter ist bekannt, daß auch die Aufnahme eines Absorbats in Schichtsysteme und Filmsysteme zur Ablösung dieser Schichten und Filme führen kann. Durch die Aufnahme des Absorbats, beispielsweise eines Gases wie Wasserstoff, entstehen mechanische Spannungen in der Schicht, die letztendlich zur Ablösung dieser Schicht führen können. Als Literatur sei hier auf die Veröffentlichung von U. Laudahn et al. in "Journal of Alloys and Compounds", 293-295 (1999), 490-494 verwiesen. Die genannten Untersuchungen gehen jedoch nicht über eine reine Beobachtung der induzierten mechanischen Spannungen hinaus.

Eine vergleichbare Untersuchung geht aus dem Derwent-Dokument XP002293922 (SU 1592764 A, Nagirnyi V M) hervor. Dort wird zwar ebenfalls eine Metallschicht mit Wasserstoffatomen beladen, um an der Grenzfläche zwischen dieser Metallschicht und einem Substrat Fehlstellen zu detektieren. Eine Quantifizierung der Ergebnisse, die für eine Reproduzierbarkeit und Vergleichbarkeit der Bestimmung von Hafteigenschaften unerlässlich ist, findet jedoch auch bei dieser Untersuchung nicht statt.

Die Erfindung stellt sich die Aufgabe, die Hafteigenschaften von Beschichtungen oder Filmen auf einem Substrat zuverlässig und reproduzierbar zu bestimmen. Dabei sollen über das Verfahren quantifizierbare Ergebnisse zugänglich sein, so daß Schichtsysteme vor ihrer industriellen Anwendung auf die jeweiligen Anforderungen der Hafteigenschaften getestet werden können.

Diese Aufgabe wird gelöst durch das Verfahren mit den Merkmalen des Anspruchs 1. Bevorzugte Ausführungen des Verfahrens sind in den abhängigen Ansprüchen 2 bis 25 dargestellt. Der Wortlaut sämtlicher Ansprüche wird hiermit durch Bezugnahme zum Inhalt dieser Beschreibung gemacht.

Gemäß der Erfindung ist das eingangs erwähnte Verfahren so ausgestaltet, daß die Beschichtung oder der Film mit mindestens einem Absorbat beaufschlagt wird. Dann wird mindestens eine kritische physikalische oder chemische Meßgröße bestimmt, bei der sich die beiden Materialien mindestens teilweise, insbesondere im wesentlichen vollständig, voneinander lösen. Durch die im Rahmen der Erfindung kontrolliert erfolgende Aufnahme des Absorbats in eines der beiden Materialien quillt dieses auf bzw. dehnt sich aus. Die aufgrund der Haftung am anderen Material entstehenden mechanischen Spannungen führen zur mindestens teilweisen Ablösung der Materialien voneinander. Auf diese Weise läßt sich eine kritische physikalische oder chemische Meßgröße bestimmen, die als Maß für die Hafteigenschaften der beiden Materialien aneinander dient. Bei dem erfindungsgemäßen Verfahren wird dabei mit Hilfe der erhaltenen kritischen Meßgröße die sogenannte Adhäsionsenergie (rechnerisch) bestimmt. Hierbei kann die entsprechende mathematische Funktion je nach verwendeten Materialien und konkreter Aufgabenstellung hergeleitet werden.

Bei einer bevorzugten Ausführungsform des erfindungsgemäßen Verfahrens handelt es sich bei der kritischen Meßgröße um die Absorbatmenge, mit der eines der beiden Materialien, insbesondere die Beschichtung oder der Film, beaufschlagt wird. Wie später noch erläutert, lassen sich solche Absorbatmengen häufig auf einfache Weise bestimmen.

Bei einer weiteren bevorzugten Ausführungsform des erfindungsgemäßen Verfahrens handelt es sich bei der kritischen Meßgröße um die Krümmung eines Materials, vorzugsweise des Substrats, die aus der Beaufschlagung dieses Materials mit dem Absorbat resultiert. Auch solche Krümmungen lassen sich häufig auf einfache Weise bestimmen. Dies wird später im Zusammenhang mit dem Beispiel noch näher erläutert.

Es versteht sich, daß die Erfindung nicht auf die beiden genannten kritischen Meßgrößen (Absorbatmenge, Substratkrümmung) beschränkt ist. Es können grundsätzlich alle Meßgrößen gewählt werden, die bei teilweiser oder vollständiger Ablösung der beiden Materialien voneinander bestimmbar sind.

Grundsätzlich ist es erfindungsgemäß möglich, die kritische physikalische oder chemische Meßgröße bei einmaliger Durchführung der Verfahrensschritte zu bestimmen. Dies ist insbesondere dann der Fall, wenn die Anfangsspannungen bei einer gewählten Materialkombination zu vernachlässigen sind. Dann ist nur eine Bestimmung/Messung je Materialkombination zur Bestimmung der Hafteigenschaften nötig. Erfindungsgemäß ist es jedoch bevorzugt, wenn die Verfahrensschritte mindestens zweimal, insbesondere mehrfach, durchgeführt werden. Dabei wird dann mindestens eine Materialstärke, insbesondere die Dicke der Beschichtung oder des Films, variiert. Je weniger häufig die Verfahrensschritte durchgeführt werden müssen, um so schneller lassen sich die Hafteigenschaften bei einer gewählten Materialkombination bestimmen. Dementsprechend ist es weiter bevorzugt, wenn die entsprechenden Verfahrensschritte pro Materialkombination nur zweimal durchgeführt werden.

Bei der Erfindung wird die Adhäsionsenergie durch Bestimmung der Steigung eines Auftrags der kritischen Meßgröße über eine Funktion, vorzugsweise die reziproke Wurzel der Materialstärke bestimmt. Bei der Materialstärke handelt es sich dabei vorzugsweise um die Dicke der Beschichtung oder des Films. Die erhaltene Adhäsionsenergie ist das direkte Maß für die Haftfähigkeit der beiden Materialien aneinander bzw. aufeinander. Die genaue Vorgehensweise bei diesen bevorzugten Ausführungsformen der Erfindung ergibt sich aus der weiteren Beschreibung sowie den Figuren.

Die Vorteile des erfindungsgemäßen Verfahrens zeigen sich insbesondere bei Materialverbundsystemen, bei denen die Dicke des ersten Materials, insbesondere der Beschichtung oder des Films klein gegenüber der Dicke des zweiten Materials, insbesondere des Substrats ist. Dies entspricht genau den bevorzugten Anwendungsfällen, bei denen Hafteigenschaften von mindestens zwei Materialien aneinander oder aufeinander bestimmt werden sollen. Materialverbundsysteme, für die das erfindungsgemäße Verfahren in besonders bevorzugter Weise anwendbar ist, lassen sich über das Verhältnis $Es^2 / d$ definieren, mit E = Elastizitätsmodul des Substrats, s = Dicke des Substrats und d = Dicke der Beschichtung bzw. des Films. Entsprechende bevorzugte Werte für dieses Verhältnis liegen zwischen $10^8$ Pa·m und $10^{14}$ Pa·m, insbesondere zwischen $10^{10}$ Pa·m und $10^{13}$ Pa·m.

Grundsätzlich können mit dem erfindungsgemäßen Verfahren Materialverbundsysteme mit ganz unterschiedlichen Materialstärken untersucht werden. Es ist aber bevorzugt, wenn die Materialstärken, d. h. die Dicke sowohl des ersten Materials als auch des zweiten Materials, insbesondere der Beschichtung/des Films bzw. des Substrats, zwischen 1 nm (Nanometer) und 5 mm (Millimeter) betragen. Innerhalb dieser Bereiche sind für die Dicke des Substrats Werte zwischen 1 $\mu$m (Mikrometer) und 5 mm sowie für die Dicke der Beschichtung oder des Films Werte zwischen 1 nm und 1 $\mu$m zu nennen. Auch diese bevorzugt genannten Werte betreffen die bevorzugten Anwendungsfälle für die Bestimmung von Hafteigenschaften.

Bei dem Absorbat, mit dem mindestens ein Material beaufschlagt wird, handelt es sich vorzugsweise um mindestens eine Flüssigkeit. Diese Flüssigkeit ist bei einer ersten Gruppe von weiter bevorzugten Ausführungsformen Wasser. Bei einer weiteren Gruppe von bevorzugten Ausführungsformen handelt es sich bei der Flüssigkeit um ein organisches Lösungsmittel, insbesondere um Dichlormethan oder Tetrachlormethan.

Bei anderen besonders bevorzugten Ausführungsformen der Erfindung handelt es sich bei dem Absorbat um mindestens ein Gas. Hier sind als bevorzugte Gase Kohlendioxid oder gasförmige Elemente, insbesondere Wasserstoff, zu nennen. Gerade Wasserstoff läßt sich auf einfache und reproduzierbare Weise in bestimmten Mengen in Materialien einbringen.

Grundsätzlich kann die Beaufschlagung eines Materials mit dem Absorbat erfindungsgemäß auf beliebige Weise erfolgen. Es ist jedoch zum einen bevorzugt, wenn die Beaufschlagung mit dem Absorbat direkt aus der Flüssigkeitsphase oder der Gasphase erfolgt. Zum anderen sind Ausführungsformen besonders bevorzugt, bei denen die Beaufschlagung mit einem gasförmigen Absorbat, insbesondere mit Wasserstoff, durch die sogenannte elektrochemische Beladung erfolgt. Bei dieser Vorgehensweise wird das Gas, insbesondere der Wasserstoff, direkt an dem zu beladenden Material elektrochemisch durch Ladungsfluß erzeugt, beispielsweise aus Wasserstoffionen in vorzugsweise sauren Lösungen. Dies wird im Zusammenhang mit den Figuren noch näher erläutert.

Erfindungsgemäß handelt es sich bei dem ersten Material, insbesondere bei dem Material der Beschichtung oder des Films, bevorzugt um ein Metall, insbesondere ein Edelmetall. Bei weiteren bevorzugten Ausführungsformen des erfindungsgemäßen Verfahrens handelt es sich bei dem ersten Material, insbesondere bei dem Material der Beschichtung oder des Films, um ein Polymermaterial, insbesondere einen Lack.

Als zweites Material, insbesondere als Substrat wird erfindungsgemäß vorzugsweise ein Polymermaterial eingesetzt. Auf diese Weise betreffen diese Ausführungsformen insbesondere die Materialkombination Beschichtung/Film aus Metall auf Substrat aus Polymermaterial (Kunststoff).

Ebenfalls bevorzugt sind erfindungsgemäß Ausführungsformen, bei denen als zweites Material, insbesondere als Substrat, vorzugsweise ein Metall, eingesetzt wird. Diese Ausführungsformen umfassen die bevorzugten Materialkombinationen Beschichtung/Film aus Polymermaterial (bspw. Lack) auf Metallsubstrat.

Die Bestimmung der kritischen Meßgröße bei der teilweisen, insbesondere im wesentlichen vollständigen Ablösung der beiden Materialien voneinander, kann grundsätzlich auf beliebige Weise erfolgen. Vorzugsweise bestimmt man die kritische Meßgröße zu dem Zeitpunkt, wenn lokal erstmals eine Ablösung der beiden Materialien voneinander stattfindet, beispielsweise durch Ausbildung einer Aufwölbung oder Hügels. Bei bevorzugten Ausführungsformen der Erfindung wird der Ablösevorgang der beiden Materialien (insbesondere Ablösung Beschichtung/Film vom Substrat) mit Hilfe optischer Methoden verfolgt. Im einfachsten Fall kann dies mit dem Auge geschehen, insbesondere mit Hilfe eines Lichtmikroskops oder einer entsprechenden anderen optischen Einrichtung (z. B. CCD-Kamera).

Eine andere bevorzugte Vorgehensweise beinhaltet die Bestimmung der Oberflächenrauhigkeit bzw. deren Veränderung beim Ablösevorgang. Diese Oberflächenrauhigkeit kann ebenfalls auf beliebige Weise bestimmt werden, wobei auch hier der Einsatz optischer Methoden bevorzugt ist. So können insbesondere die Oberflächenreflektivität oder das Oberflächenstreuverhalten bzw. die Veränderung dieser Größen bestimmt werden.

Das erfindungsgemäße Verfahren ist auch für Materialkombinationen anwendbar, bei denen die beiden Materialien des Verbundes selbst kein oder nur wenig Absorbat aufnehmen können. In diesen Fällen wird mindestens eine das Absorbat aufnehmende Beschichtung oder ein entsprechender Film mit einer das Absorbat nicht oder nur in geringer Konzentration aufnehmenden weiteren Beschichtung/Film festhaftend verbunden. Dann werden durch Beaufschlagung der das Absorbat aufnehmenden Beschichtung/Film mit dem Absorbat die Hafteigenschaften der das Absorbat nicht oder nur in geringer Konzentration aufnehmenden Beschichtung/Film am Substrat bestimmt. Diese Vorgehensweise wird im Zusammenhang mit den Figuren noch näher erläutert.

Aus der Darstellung der zuletzt beschriebenen bevorzugten Ausführungsformen ergibt sich, daß die Erfindung nicht auf die Untersuchung von Materialkombinationen aus zwei Materialien beschränkt ist. Vorzugsweise ist zur Bestimmung der Hafteigenschaften ein Schichtaufbau (einschließlich des Substrats) aus zwei bis vier, insbesondere zwei oder drei, Schichten bevorzugt.

Das erfindungsgemäße Verfahren hat den Vorteil, daß durch die kontrollierte Beaufschlagung eines Materials in einem Schichtaufbau die Hafteigenschaften zweier Materialien aneinander oder aufeinander einfach und reproduzierbar bestimmt werden können. Wird die Absorbatkonzentration gezielt nur bis zur teilweisen Ablösung der Materialien voneinander erhöht, so erfolgt die Bestimmung der Hafteigenschaften quasi zerstörungsfrei. Die mit Hilfe des erfindungsgemäßen Verfahrens erhaltenen Aussagen ermöglichen es, die Hafteigenschaften von Materialsystemen bereits im Vorfeld gezielt zu untersuchen. Außerdem sind quantitative Aussagen möglich, die eine gezielte Vorabauswahl bestimmter Materialkombinationen ermöglichen.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen. Hierbei können die einzelnen Merkmale jeweils für sich oder zu mehreren in Kombination miteinander verwirklicht sein.

In den Zeichnungen zeigen:

Fig. 1 die schematische Darstellung eines Verbundsystems aus zwei Materialien während der Aufnahme des Absorbats in das obere der beiden Materialien,

Fig. 2 den Schichtaufbau der im Beispiel erläuterten Ausführungsformen des erfindungsgemäßen Verfahrens,

Fig. 3 die Morphologieentwicklung der Oberfläche des Schichtaufbaus der im Beispiel erläuterten Ausführungsform des erfindungsgemäßen Verfahrens, und

Fig. 4 die Bestimmung der Adhäsionsenergie bei der im Beispiel erläuterten Ausführungsform des erfindungsgemäßen Verfahrens.

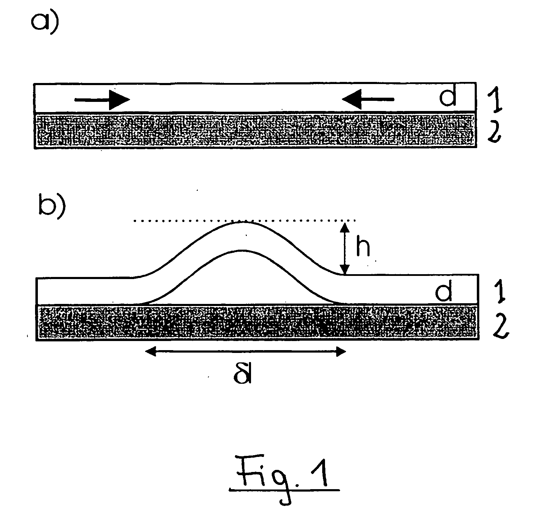

In Fig. 1 ist das dem erfindungsgemäßen Verfahren zugrundeliegende Prinzip mit einer einfachen Darstellung schematisch erläutert.

Zwei Materialien 1 und 2 haften bei Bildung eines entsprechenden Verbundsystems aneinander. Durch die in Fig. 1a) nicht näher dargestellte Aufnahme eines Absorbats, beispielsweise Wasserstoff, in die obere Schicht (Material 1) werden dort hohe, durch die Pfeile dargestellte, Spannungen in dieser Schicht erzeugt. Dies führt gemäß Fig. 1b) zu einer Ablösung der oberen Schicht (Material 1) von der unteren Schicht/Substrat (Material 2) über die in Fig. 1b) dargestellte Länge $\delta l$. Über diese Länge geht die Haftung zwischen Material 1 und Material 2 verloren, mit der maximalen Höhe h des abgelösten Teils des Materials 1 (wie in Fig. 1b) dargestellt).

**Beispiel**

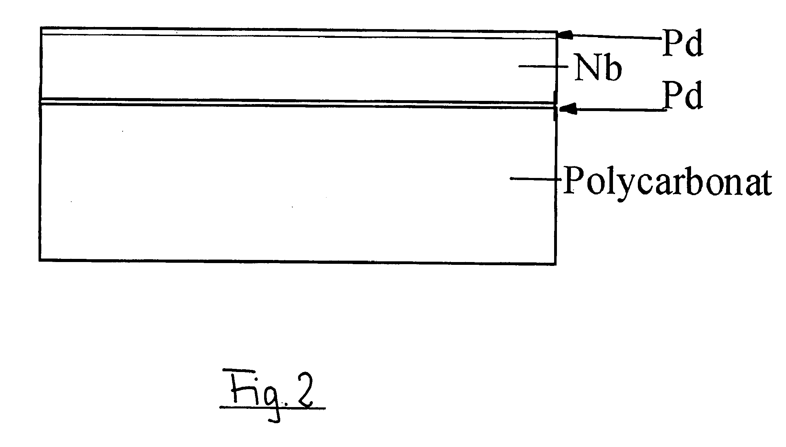

Es werden dünne Palladium/Niob/Palladium-Schichtfolgen durch Argon-Sputtering auf Polycarbonat-Substraten von 250 µm Dicke abgeschieden. Dazu werden zunächst die Polycarbonat-Substrate kurz mit Isopropanol gereinigt. Die Metallfilme werden bei Raumtemperatur in einer Ultrahochvakuumkammer ($10^{-10}$ mbar) bei $10^{-4}$ mbar Argongas-Druck hergestellt. Dabei ergibt sich der in Fig. 2 dargestellte Schichtaufbau.

Im vorliegenden Fall betragen die Schichtdik-ken der sich oberhalb und unterhalb der Niob-Schicht befindenden Palladium-Schichten jeweils 10 nm. Die obere Palladium-Schicht dient dabei der Verhinderung der Oxidation der Niob-Schicht und zur Erleichterung einer Wasserstoffaufnahme (Absorbat = Wasserstoff) in die Niob-Schicht. Innerhalb der Niob-Schicht sollen die inneren Spannungen erzeugt werden, damit sich die unterhalb der Niob-Schicht angeordnete Palladium-Schicht vom Polycarbonat-Substrat ablöst. Untersucht werden also die Hafteigenschaften der (unteren) Palladium-Schicht am Polycarbonat-Substrat. Im Beispiel werden Niob-Schichten von 10 nm, 30 nm, 100 nm und 200 nm Dicke mit niedrigen Abscheideraten von 1,6 nm/min hergestellt.

Alle erhaltenen Schichtaufbauten werden vor Beladung mit Wasserstoff im Lichtmikroskop untersucht. Sie weisen im wesentlichen glatte Metalloberflächen auf mit lediglich wenigen Kratzern, die von dem Polycarbonat-Substrat herrühren.

Anschließend wurde der Schichtaufbau durch die (quasi als "Fenster" dienende) obere Palladium-Schicht mit Wasserstoff elektrochemisch beladen. Zu diesem Zweck wird eine Lösung von Glycerin und Phosphorsäure (2:1) verwendet. Diese elektrochemische Beladung stellt eine einfache Methode dar, da die in den Schichtaufbau aufgenommene Wasserstoffkonzentration einfach durch Messung der elektrischen Ladung über das Faradaysche Gesetz bestimmt werden kann (R. Kirchheim, Prog. Mat. Sci. 32 (1988), 261-325). In der genannten Literaturstelle ist auch ein entsprechender apparativer Aufbau dargestellt. Um die Aufnahme des Wasserstoffs verfolgen zu können, wurde die entsprechende Probe auf das Gestell eines optischen Mikroskops aufgebaut. Die Änderung der Oberflächenstruktur während der Beladung mit Wasserstoff wurde in-situ mit einer CCD-Kamera optisch verfolgt.

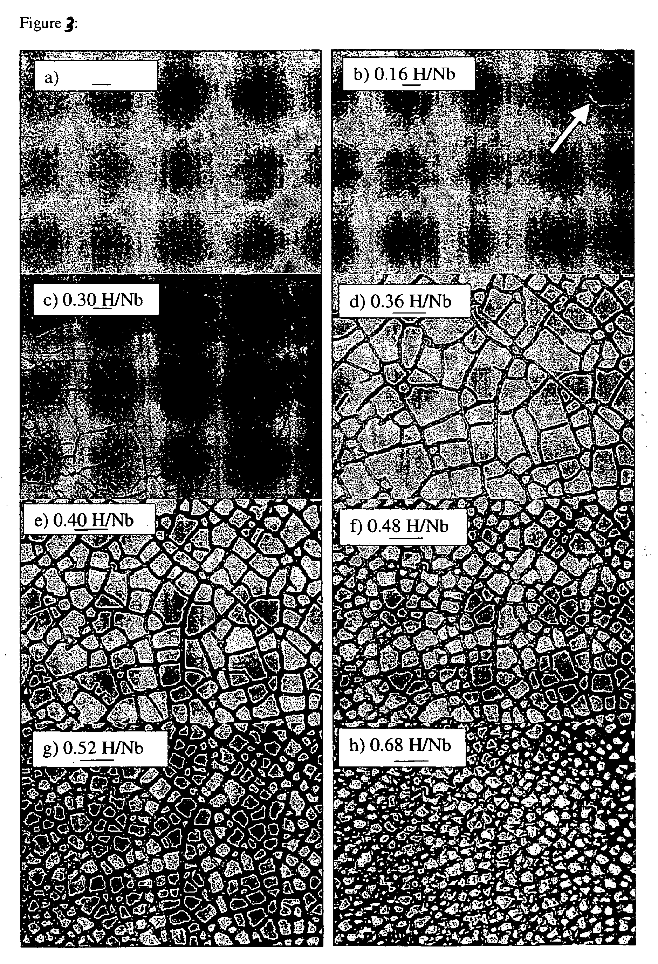

Die Ergebnisse dieser optischen Verfolgung sind in Fig. 3 dargestellt. Daraus ergeben sich die Aufnahmen der CCD-Kamera während der Wasserstoffbeladung von a) 0 H/Nb bis zu h) 0,68 H/Nb. Der unter den Konzentrationsangaben dargestellte Balken entspricht jeweils der Länge von 100 µm. Fig. 3 stellt dabei das Ergebnis des erfindungsgemäßen Verfahrens für eine Niob-Schichtdicke von 100 nm dar.

Wie Fig. 3 zeigt, sind zu Anfang (0 H) nur die vom Substrat herrührenden wenigen Kratzer zu sehen. Durch Beladen mit Wasserstoff und Aufnahme des Wasserstoffs in die Niob-Schicht über die zuoberst angeordnete Palladium-Schicht werden die Spannungen in der Schichtebene des Niobs sukzessive erhöht. Dabei bleibt die Oberfläche des Schichtaufbaus bis zu einer Wasserstoffkonzentration von 0,14 H/Nb im wesentlichen unverändert. Oberhalb dieser Konzentration tauchen zusätzliche lineare Linien auf, wie dies durch den Pfeil in Fig. 3b) angedeutet ist. Hier findet also eine.erste Rißbildung statt. Durch Wechsel der Beleuchtungsverhältnisse im Lichtmikroskop und durch zusätzliche Versuche in einem Interferenzmikroskop konnte festgestellt werden, daß hier in der Tat ein Abheben der Oberfläche vonstatten geht. Bei weiterer Erhöhung der Wasserstoffkonzentrationen erstrecken die Linien sich weiter über die gesamte Oberfläche, wie in Fig. 3d) bis 3h) dargestellt ist. Außerdem erhöht sich die Linienbreite mit der Wasserstoffkonzentration. Schließlich wird eine netzförmige Oberflächenstruktur erreicht, die mit zunehmender Wasserstoffkonzentration immer feinmaschiger wird. Durch optische Kontrolle wird eine kritische Wasserstoffkonzentration festgelegt, bei der sich die oberen Schichten erstmals lokal vom Polycarbonat-Substrat ablösen. Dabei wird im vorliegenden Fall die erste sichtbare Aufwölbung zur Festlegung dieser kritischen Konzentration herangezogen.

Die Filmablösung und die auftretenden Muster werden für verschiedene Niob-Filmdicken untersucht, was zu vergleichbaren optischen Ergebnissen wie in Fig. 3 führt. Auch hier werden die kritischen Wasserstoffkonzentrationen bestimmt, bei denen sich die oberen Schichten erstmals lokal vom Substrat abgelöst haben. Dünnere Niob-Schichten nehmen vergleichsweise höhere Wasserstoffkonzentrationen auf, bevor die Filmablösung startet und sich die entsprechenden netzförmigen Aufwölbungen ausbilden.

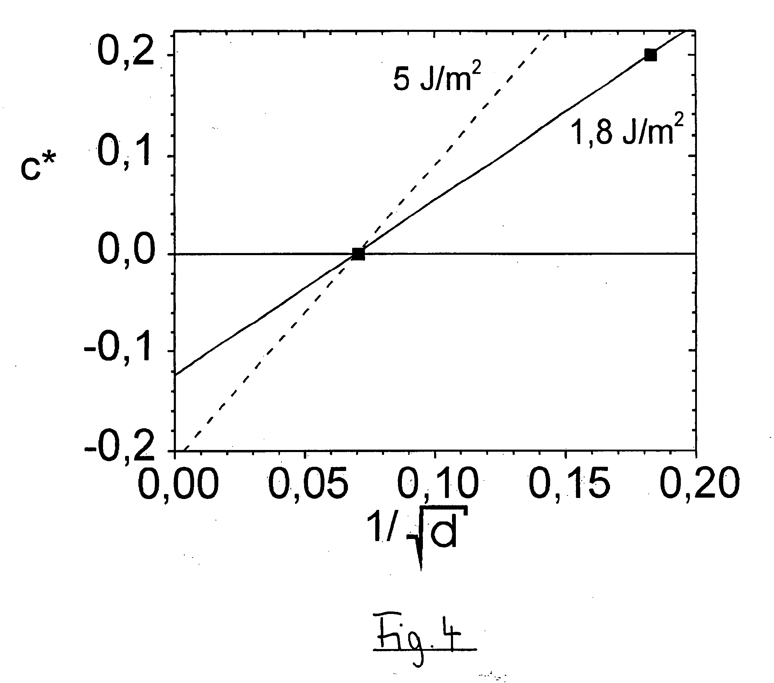

Die Auswertung der erhaltenen Ergebnisse für verschiedene Schichtdicken ist in Fig. 4 dargestellt. Dort ist die kritische Absorbatkonzentration (bezeichnet mit $c^*$) als Funktion der reziproken Materialdicke $1/\sqrt{d}$ (d = Schichtdicke des Niob) aufgetragen. Aus der Steigung dieses Auftrags, nämlich $\sqrt{(1-\nu) \cdot \gamma /(\alpha_H^2 E)}$ mit $\nu$ Poisson-Zahl des Niob, $\alpha_H$ Materialausdehnungskonstante des Niob, E Elastizitätsmodul des Niob, ergibt sich die Adhäsionsenergie γ. Diese ist das Maß für die Haftung zweier Materialien aufeinander. Im Falle des hier diskutierten Beispiels wurde die Adhäsionsenergie von Palladium (untere Schicht gemäß Fig. 2) und Polycarbonat-Substrat zu 1,8 J/m² bestimmt. Lediglich zum Vergleich ist in Fig. 3 noch der Verlauf einer Geraden eingezeichnet, die einer Adhäsionsenergie von 5 J/m² entsprechen würde.

In vergleichbarer Weise kann die Adhäsionsenergie über die Messung der Substratkrümmung mit Hilfe eines geeigneten Dehnungsmessgeräts bestimmt werden. Die in der Niobschicht während des Beladens mit Wasserstoff entstehenden Spannungen werden dabei über die Krümmung/Durchbiegung des Substrats bestimmt, das beispielsweise an einer Seite in einer geeigneten Apparatur fest eingespannt ist. Die Krümmung kann dabei beispielsweise über ein an der anderen Seite des Substrats angebrachtes Metallelement mit einem induktiv arbeitenden Dehnungsmessgerät verfolgt werden. Die Oberfläche des Schichtaufbaus bei der Aufnahme des Wasserstoffs und die entstehenden Aufwölbungen und Ablösungen werden dabei ebenfalls über ein optisches Mikroskop und eine CCD-Kamera beobachtet. Die kritische Messgröße ist in diesem Fall die Substratkrümmung, und daraus berechenbar die kritische Spannung in der Niobschicht, bei Ablösung der oberen Schichten vom Substrat. Die kritische Spannung kann alternativ auch als der Spannungswert bestimmt werden, bei dem in einem Auftrag der Spannung über die Wasserstoffkonzentration in der Niobschicht die tatsächlich gemessenen Spannungswerte signifikant, beispielsweise um 10 %, von dem extrapolierten linearen Verlauf dieser Spannungs/Kohzentrationskurven bei niedrigen Wasserstoffkonzentrationen abweichen. Trägt man die erhaltenen kritischen Spannungswerte gegen die reziproke Materialdicke $1/\sqrt{d}$ (d = Schichtdicke des Niob) auf, so lässt sich ebenfalls die Adhäsionsenergie (hier: von Palladium) errechnen.

Die obigen Ausführungen zeigen, daß das erfindungsgemäße Verfahren geeignet ist, die Hafteigenschaften von zwei Materialien aneinander oder aufeinander vergleichsweise einfach zu bestimmen. Über die kritische Meßgröße können quantitativ Werte, beispielsweise für die Adhäsionsenergie, erhalten werden, so daß Voraussagen über die Haftung verschiedener Materialien aneinander/aufeinander ermöglicht werden. Dies macht das erfindungsgemäße Verfahren für viele technische Anwendungen, in der solche Voraussagen erwünscht sind, interessant.

**Patentansprüche**

1. Verfahren zur Bestimmung der Hafteigenschaften mindestens einer Beschichtung oder mindestens eines Films aus mindestens einem ersten Material auf einem Substrat aus einem zweiten Material, wobei

    - die mindestens eine Beschichtung oder der mindestens eine Film mit mindestens einem Absorbat beaufschlagt wird
    - mindestens eine als Maß für die Hafteigenschaften dienende physikalische oder chemische Meßgröße bestimmt wird, bei der sich die mindestens eine Beschichtung oder der mindestens eine Film vom Substrat mindestens teilweise, insbesondere vollständig ablöst, und
    - mit Hilfe der Meßgröße die sogenannte Adhäsionsenergie bestimmt wird.

2. Verfahren nach Anspruch 1, **dadurch gekennzeichnet, dass** es sich bei der Meßgröße um die beaufschlagte Absorbatmenge handelt.

3. Verfahren nach Anspruch 1, **dadurch gekennzeichnet, dass** es sich bei der Meßgröße um die aus der Beaufschlagung mit dem Absorbat resultierende Substratkrümmung handelt.

4. Verfahren nach einem der vorhergehenden Ansprüche, **dadurch gekennzeichnet, dass** die Verfahrensschritte mindestens zweimal, insbesondere mehrfach durchgeführt werden, wobei mindestens eine Materialstärke, insbesondere die Dicke der Beschichtung oder des Films, variiert wird.

5. Verfahren nach einem der vorhergehenden Ansprüche, **dadurch gekennzeichnet, dass** die Adhäsionsenergie bestimmt wird durch Bestimmung der Steigung eines Auftrags der Meßgröße über eine Funktion, vorzugsweise die reziproke Wurzel, der Materialstärke, insbesondere Dicke der Beschichtung oder des Films.

6. Verfahren nach einem der vorhergehenden Ansprüche, **dadurch gekennzeichnet, dass** die Dicke der Beschichtung oder des Films klein gegenüber der Dicke des Substrats ist.

7. Verfahren nach einem der vorhergehenden Ansprüche, **dadurch gekennzeichnet, dass** das Verhältnis $Es^2/d$ zwischen $10^8$ Pa·m und $10^{14}$ Pa·m, vorzugsweise zwischen $10^{10}$ Pa·m und $10^{13}$ Pa·m, beträgt, mit E = Elastizitätsmodul des Substrats, s = Dicke des Substrats und d = Dicke der Beschichtung bzw. des Films.

8. Verfahren nach einem der vorhergehenden Ansprüche, **dadurch gekennzeichnet, dass** die Materialstärke, insbesondere die Dicke der Beschichtung oder des Films bzw. des Substrats zwischen 1 nm und 5 mm beträgt.

9. Verfahren nach Anspruch 8, **dadurch gekennzeichnet, dass** die Dicke des Substrats zwischen 1 $\mu$m und 5 mm und die Dicke der Beschichtung oder des Films zwischen 1 nm und 1 $\mu$m beträgt.

10. Verfahren nach einem der vorhergehenden Ansprüche, **dadurch gekennzeichnet, dass** es sich bei dem Absorbat um mindestens eine Flüssigkeit handelt.

11. Verfahren nach Anspruch 10, **dadurch gekennzeichnet, dass** es sich bei dem Absorbat um Wasser handelt.

**12.** Verfahren nach Anspruch 10, **dadurch gekennzeichnet, dass** es sich bei dem Absorbat um ein organisches Lösungsmittel, insbesondere um Dichlormethan oder Tetrachlormethan handelt.

**13.** Verfahren nach einem der Ansprüche 1 bis 9, **dadurch gekennzeichnet, dass** es sich bei dem Absorbat um mindestens ein Gas handelt.

**14.** Verfahren nach Anspruch 13, **dadurch gekennzeichnet, dass** es sich bei dem Absorbat um Kohlendioxid handelt.

**15.** Verfahren nach Anspruch 13, **dadurch gekennzeichnet, dass** es sich bei dem Absorbat um ein gasförmiges Element, insbesondere um Wasserstoff, handelt.

**16.** Verfahren nach einem der Ansprüche 10 bis 15, **dadurch gekennzeichnet, dass** die Beaufschlagung mit dem Absorbat direkt aus der Flüssigkeits- oder Gasphase erfolgt.

**17.** Verfahren nach einem der Ansprüche 13 bis 16, **dadurch gekennzeichnet, dass** die Beaufschlagung mit dem Gas durch elektrochemische Beladung erfolgt.

**18.** Verfahren nach einem der vorhergehenden Ansprüche, **dadurch gekennzeichnet, dass** es sich bei dem ersten Material der Beschichtung oder des Films um ein Metall, insbesondere ein Edelmetall, handelt.

**19.** Verfahren nach einem der Ansprüche 1 bis 17, **dadurch gekennzeichnet, dass** es sich bei dem ersten Material der Beschichtung oder des Films um ein Polymermaterial, insbesondere einen Lack, handelt.

**20.** Verfahren nach einem der vorhergehenden Ansprüche, **dadurch gekennzeichnet, dass** es sich bei dem zweiten Material des Substrats um ein Polymermaterial handelt.

**21.** Verfahren nach einem der Ansprüche 1 bis 19, **dadurch gekennzeichnet, dass** es sich bei dem zweiten Material des Substrats um ein Metall handelt.

**22.** Verfahren nach einem der vorhergehenden Ansprüche, **dadurch gekennzeichnet, dass** zur Bestimmung der Meßgröße der Ablösevorgang der Beschichtung oder des Films vom Substrat, optisch verfolgt wird, insbesondere mit Hilfe eines Lichtmikroskops.

**23.** Verfahren nach einem der vorhergehenden Ansprüche, **dadurch gekennzeichnet, dass** zur Bestimmung der Meßgröße beim Ablösevorgang der Beschichtung oder des Films vom Substrat, die Oberflächenrauhigkeit verfolgt wird, insbesondere durch Bestimmung der Oberflächenreflektivität und/oder des Oberflächenstreuverhaltens.

**24.** Verfahren nach einem der vorhergehenden Ansprüche, **dadurch gekennzeichnet, dass** mindestens eine das Absorbat aufnehmende Beschichtung/Film mit mindestens einer das Absorbat nicht oder nur in geringer Konzentration aufnehmenden weiteren Beschichtung/Film festhaftend verbunden ist und durch Beaufschlagung der das Absorbat aufnehmenden Beschichtung/Film mit dem Absorbat die Hafteigenschaften der das Absorbat nicht oder nur in geringer Konzentration aufnehmenden Beschichtung/Film am Substrat bestimmt wird.

**25.** Verfahren nach einem der vorhergehenden Ansprüche, **dadurch gekennzeichnet, dass** zur Bestimmung der Hafteigenschaften einschließlich des Substrats ein Schichtaufbau aus zwei bis vier, vorzugsweise zwei oder drei, Schichten vorgesehen ist.

## Claims

**1.** Method of determining the adhesion properties of at least one coating or film of at least one first material to a substrate of a second material, wherein

- the at least one coating or film is charged with at least one absorbate,
- at least one physical or chemical parameter, serving as a measure of the adhesion properties, is determined, said parameter being one at which the at least one coating or film detaches from the substrate at least partially, in particular completely, and
- with the aid of the parameter the quantity referred to as adhesion energy is determined.

**2.** Method according to Claim 1, **characterized in that** the parameter is the amount of absorbate charged.

**3.** Method according to Claim 1, **characterized in that** the parameter is the substrate curvature resulting from charging with the absorbate.

**4.** Method according to one of the preceding claims, **characterized in that** the method steps are implemented at least twice, in particular multiply, and at least one material factor, in particular the thickness of the coating or film, is varied.

**5.** Method according one of the preceding claims, **characterized in that** the adhesion energy is determined by determining the slope of a plot of the parameter against a function, preferably the reciprocal root, of the material factor, in particular the thickness of the coating or film.

6. Method according to one of the preceding claims, **characterized in that** the thickness of the coating or film is low relative to the thickness of the substrate.

7. Method according to one of the preceding claims, **characterized in that** the relationship $Es^2/d$ is between $10^8$ Pa·m and $10^{14}$ Pa·m, preferably between $10^{10}$ Pa·m and $10^{13}$ Pa·m, where E is the elasticity modulus of the substrate, s is the thickness of the substrate and d is the thickness of the coating or film.

8. Method according to one of the preceding claims, **characterized in that** the material factor, in particular the thickness of the coating or film, and/or of the substrate is between 1 nm and 5 mm.

9. Method according to Claim 8, **characterized in that** the thickness of the substrate is between 1 $\mu$m and 5 mm and the thickness of the coating or film is between 1 nm and 1 $\mu$m.

10. Method according to one of the preceding claims, **characterized in that** the absorbate is at least one liquid.

11. Method according to Claim 10, **characterized in that** the absorbate is water.

12. Method according to Claim 10, **characterized in that** the absorbate is an organic solvent, in particular dichloromethane or tetrachloromethane.

13. Method according to one of Claims 1 to 9, **characterized in that** the absorbate is at least one gas.

14. Method according to Claim 13, **characterized in that** the absorbate is carbon dioxide.

15. Method according to Claim 13, **characterized in that** the absorbate is a gaseous element, in particular hydrogen.

16. Method according to one of Claims 10 to 15, **characterized in that** charging with the absorbate takes place directly from the liquid phase or gas phase.

17. Method according to one of Claims 13 to 16, **characterized in that** charging with the gas takes place by electrochemical charging.

18. Method according to one of the preceding claims, **characterized in that** the first material of the coating or film is a metal, in particular a noble metal.

19. Method according to one of Claims 1 to 17, **characterized in that** the first material of the coating or film is a polymer material, in particular a coating material.

20. Method according to one of the preceding claims, **characterized in that** the second material of the substrate is a polymer material.

21. Method according to one of Claims 1 to 19, **characterized in that** the second material of the substrate is a metal.

22. Method according to one of the preceding claims, **characterized in that** in order to determine the parameter, the detachment process of the coating or film from the substrate is monitored optically, in particular using a light microscope.

23. Method according to one of the preceding claims, **characterized in that** in order to determine the parameter in the detachment process of the coating or film from the substrate, the surface roughness is monitored, in particular by determination of the surface reflectivity and/or of the surface scattering behaviour.

24. Method according to one of the preceding claims, **characterized in that** at least one coating/film which absorbs the absorbate is firmly connected to at least one further coating/film which does not absorb the absorbate, or which absorbs it only at a low concentration, and by charging the coating/film which absorbs the absorbate with the absorbate the adhesion properties of the coating/film which does not absorb the absorbate or which absorbs it only at a low concentration to the substrate is determined.

25. Method according to one of the preceding claims, **characterized in that** for the determination of the adhesion properties, including the substrate, a layer construction of from two to four, preferably two or three, layers is provided.

**Revendications**

1. Procédé en vue de la détermination des propriétés d'adhésion d'au moins un revêtement ou d'au moins un film fait d'au moins un premier matériau sur un substrat fait d'un deuxième matériau,

   - au moins un absorbat étant appliqué à l'au moins un revêtement ou l'au moins un film,
   - au moins une grandeur de mesure, physique ou chimique, servant en tant que mesure pour les propriétés d'adhésion étant déterminée, détermination lors de laquelle le au moins un revêtement ou le au moins un film se détache, au moins partiellement, en particulier complètement, du substrat, et
- ce que l'on appelle l'énergie d'adhésion étant déterminée à l'aide de la grandeur de mesure.

2. Procédé selon la revendication 1, **caractérisé en ce qu'**il s'agit, dans le cas de la grandeur de mesure, de la quantité d'absorbat appliquée.

3. Procédé selon la revendication 1, **caractérisé en ce qu'**il s'agit, dans le cas de la grandeur de mesure, de la courbure du substrat résultant de l'application de l'absorbat.

4. Procédé selon l'une quelconque des revendications précédentes, **caractérisé en ce que** les étapes de procédé sont effectuées au moins à deux reprises, en particulier à plusieurs reprises, au moins une épaisseur de matériau, en particulier l'épaisseur du revêtement ou du film, étant variée.

5. Procédé selon l'une quelconque des revendications précédentes, **caractérisé en ce que** l'énergie d'adhésion est déterminée par la détermination de la pente de la représentation de la grandeur de mesure par l'intermédiaire d'une fonction, de préférence, de la racine réciproque, de l'épaisseur du matériau, en particulier de l'épaisseur du revêtement ou du film.

6. Procédé selon l'une quelconque des revendications précédentes, **caractérisé en ce que** l'épaisseur du revêtement ou du film est petite par rapport à l'épaisseur du substrat.

7. Procédé selon l'une quelconque des revendications précédentes, **caractérisé en ce que** le rapport $Es^2/d$ est compris entre $10^8$ Pa.m et $10^{14}$ Pa.m, de préférence, entre $10^{10}$ Pa.m et $10^{13}$ Pa.m, où E = le module d'élasticité du substrat, s = l'épaisseur du substrat et d = l'épaisseur du revêtement ou du film.

8. Procédé selon l'une quelconque des revendications précédentes, **caractérisé en ce que** l'épaisseur de matériau, en particulier l'épaisseur du revêtement ou du film ou du substrat est comprise entre 1 nm et 5 mm.

9. Procédé selon la revendication 8, **caractérisé en ce que** l'épaisseur du substrat est comprise entre 1 $\mu$m et 5 mm et **en ce que** l'épaisseur du revêtement ou du film est comprise entre 1 nm et 1 $\mu$m.

10. Procédé selon l'une quelconque des revendications précédentes, **caractérisé en ce qu'**il s'agit, dans le cas de l'absorbat, d'au moins un liquide.

11. Procédé selon la revendication 10, **caractérisé en ce qu'**il s'agit, dans le cas de l'absorbat, de l'eau.

12. Procédé selon la revendication 10, **caractérisé en ce qu'**il s'agit, dans le cas de l'absorbat, d'un solvant organique, en particulier de dichlorométhane ou de tétrachlorométhane.

13. Procédé selon l'une quelconque des revendications 1 à 9, **caractérisé en ce qu'**il s'agit, dans le cas de l'absorbat, d'au moins un gaz.

14. Procédé selon la revendication 13, **caractérisé en ce qu'**il s'agit, dans le cas de l'absorbat, de dioxyde de carbone.

15. Procédé selon la revendication 13, **caractérisé en ce qu'**il s'agit, dans le cas de l'absorbat, d'un élément sous forme de gaz, en particulier d'hydrogène.

16. Procédé selon l'une quelconque des revendications précédentes 10 à 15, **caractérisé en ce que** l'application à l'aide de l'absorbat se fait directement à partir de la phase liquide ou de la phase gazeuse.

17. Procédé selon l'une quelconque des revendications 13 à 16, **caractérisé en ce que** l'application à l'aide du gaz se fait par chargement électrochimique.

18. Procédé selon l'une quelconque des revendications précédentes, **caractérisé en ce qu'**il s'agit, dans le cas du premier matériau du revêtement ou du film, d'un métal, en particulier d'un métal noble.

19. Procédé selon l'une quelconque des revendications 1 à 17, **caractérisé en ce qu'**il s'agit, dans le cas du premier matériau du revêtement ou du film, d'un matériau polymère, en particulier, d'un vernis.

20. Procédé selon l'une quelconque des revendications précédentes, **caractérisé en ce qu'**il s'agit, dans le cas du deuxième matériau du substrat, d'un matériau polymère.

21. Procédé selon l'une quelconque des revendications 1 à 19, **caractérisé en ce qu'**il s'agit, dans le cas du deuxième matériau du substrat, d'un métal.

22. Procédé selon l'une quelconque des revendications précédentes, **caractérisé en ce qu'**en vue de la détermination de la grandeur de mesure, la procédure de détachement du revêtement ou du film du substrat est suivie par voie optique, en particulier à l'aide d'un microscope optique.

23. Procédé selon l'une quelconque des revendications précédentes, **caractérisé en ce qu'**en vue de la détermination de la grandeur de mesure lors de la procédure de détachement du revêtement ou du film du substrat, la rugosité superficielle est suivie, en particulier par la détermination de la réflectivité superficielle et/ou du comportement de dispersion superficiel.

24. Procédé selon l'une quelconque des revendications précédentes, **caractérisé en ce qu'**au moins un revêtement/un film absorbant l'absorbat est lié d'une manière adhérente et solide avec au moins un autre revêtement/un autre film n'absorbant pas l'absorbat ou n'absorbant l'absorbat que dans une concentration faible et **en ce que**, par application de l'absorbat au revêtement/au film absorbant l'absorbat, on détermine les propriétés d'adhésion du revêtement/du film n'absorbat pas l'absorbat ou n'absorbant l'adsorbat que dans une concentration faible sur le substrat.

25. Procédé selon l'une quelconque des revendications précédentes, **caractérisé en ce que** l'on prévoit, en vue de la détermination des propriétés d'adhésion y compris du substrat, une construction à couches faite de deux à quatre couches, de préférence de deux ou trois couches.

a)

b)

Fig. 1

EP 1 380 832 B1

Pd
Nb
Pd
Polycarbonat

Fig. 2

Figure *3*:

5 J/m²

1,8 J/m²

c*

0,2
0,1
0,0
-0,1
-0,2

0,00   0,05   0,10   0,15   0,20

$1/\sqrt{d}$

Fig. 4